# EUROPÄISCHE PATENTSCHRIFT

(11) **EP 2 682 184 B1**
(45) Veröffentlichungstag und Bekanntmachung des Hinweises auf die Patenterteilung: **05.08.2020**
(21) Anmeldenummer: 13003194.1
(22) Anmeldetag: 22.06.2013
(51) Int. Cl.: B01J 21/06, B01J 23/42, B01D 53/94, B01J 35/02

(54) **KATALYSATOR, VERFAHREN ZUR HERSTELLUNG DES KATALYSATORS, VERWENDUNG DES KATALYSATORS**
CATALYST, METHOD FOR THE PREPARATION OF THE CATALYST, USE OF THE CATALYST
CATALYSEUR, PROCÉDÉ DE FABRICATION DU CATALYSEUR, UTILISATION DU CATALYSEUR

(30) Priorität: 05.07.2012 DE 102012013288
(43) Veröffentlichungstag der Anmeldung: 08.01.2014
(73) Patentinhaber: MAN Truck & Bus SE, 80995 München (DE)
(72) Erfinder: Döring, Andreas, 82008 München (DE)
(74) Vertreter: v. Bezold & Partner Patentanwälte - PartG mbB

(56) Entgegenhaltungen:
- EP-A1- 1 138 632
- EP-A2- 0 385 164
- DE-T2- 69 705 901
- US-A- 5 830 421

## Beschreibung

Die Erfindung betrifft einen Katalysator, insbesondere zur Oxidation von Abgasbestandteilen, gemäß dem Oberbegriff des Patentanspruchs 9, ein Verfahren zum Herstellen eines solchen Katalysators gemäß dem Oberbegriff des Patentanspruchs 1, sowie die Verwendung eines vorgenannten Katalysators gemäß dem Oberbegriff von Patentanspruch 16 und eine unter Verwendung eines solchen Katalysators hergestellte Beschichtung gemäß dem Oberbegriff von Patentanspruch 17.

Katalysatoren, insbesondere zur Oxidation von Abgasbestandteilen, sind seit geraumer Zeit bekannt und werden vielfach, beispielsweise nachgeschaltet zu Verbrennungsmotoren, eingesetzt, um unerwünschte Abgasbestandteile aus dem Abgas der Verbrennungsmotoren zu entfernen.

Ein Schlüsselmolekül bei der Verminderung unerwünschter Abgasbestandteile stellt hierbei NO₂ dar.

Zur Minimierung von kohlenstoffhaltigen Feinstoffpartikeln werden in Kraftfahrzeugen üblicherweise sogenannte Partikelabscheider oder Partikelfilter eingesetzt. Eine typische Partikelabscheider-Anordnung in Fahrzeugen ist beispielsweise aus der EP 1 072 765 A2 bekannt. Derartige Partikelabscheider unterscheiden sich von den Partikelfiltern dadurch, dass der Abgasstrom entlang der Abscheidestrukturen geführt wird, während bei Partikelfiltern das Abgas durch das Filtermedium hindurchströmen muss. Infolge dieses Unterschiedes neigen Partikelfilter zur Verstopfung, was einen Abgasgegendruck erhöht, das heißt eine unerwünschte Druckerhöhung am Abgasausgang einer Brennkraftmaschine hervorruft, was wiederum die Motorleistung mindert und einen erhöhten Kraftstoffverbrauch der Brennkraftmaschine zur Folge hat. Ein Beispiel für eine derartige Partikelfilter-Anordnung ist aus der EP 0 341 832 A2 bekannt.

Bei beiden vorstehend beschriebenen Anordnungen oxidiert jeweils ein stromauf des Partikelabscheiders bzw. des Partikelfilters angeordneter Oxidationskatalysator das Stickstoffmonoxid (NO) im Abgas mit Hilfe von ebenfalls enthaltenem Restsauerstoff (02) zu Stickstoffdioxid (NO₂), und zwar gemäß folgender Gleichung:

2 NO + O₂ <-> 2 NO₂ (1)

Dabei ist zu beachten, dass das Gleichgewicht der obigen Reaktion bei hohen Temperaturen auf der Seite von NO liegt. Dies hat wiederum zur Folge, dass die erzielbaren NO₂-Anteile bei hohen Temperaturen aufgrund dieser thermodynamischen Begrenzung limitiert sind.

Das NO₂ setzt sich wiederum im Partikelfilter mit den kohlenstoffhaltigen Feinstpartikeln zu CO, CO₂, N₂ und NO um. Mit Hilfe des starken Oxidationsmittels NO₂ erfolgt somit eine kontinuierliche Entfernung der angelagerten Feinstoffpartikel, so dass Regenerationszyklen, wie sie aufwendig bei anderen Anordnungen durchgeführt werden müssen, entfallen können. Man spricht in diesem Zusammenhang von einer passiven Regeneration, gemäß nachstehender Gleichungen:

C + 2 NO₂ -> 2 NO+ CO₂ (2)

NO₂ + C -> NO + CO (3)

Die Bildung von Kohlenmonoxid nach Gleichung (3) spielt dabei eine nur untergeordnete Rolle, meist findet eine komplette Oxidation des Kohlenstoffs bis zur Oxidationsstufe +4, in Form von Kohlendioxid, statt, wobei für diese Oxidation pro Kohlenstoffmolekül zwei NO₂-Moleküle benötigt werden.

Neben NO₂ wird an platinhaltigen NO-Oxidationskatalysatoren auch SO₃, aus im Kraftstoff- und/oder Motorenöl enthaltenem Schwefel gebildet. Das SO₃ und NO₂ kondensieren an kalten Stellen im Abgastrakt zu hochkorrosiver Schwefel- bzw. Salpetersäure, so dass die Abgasanlage bis zu den Partikelfiltern in Edelstahl ausgeführt werden muss, um eine Korrosion zu vermeiden. Ein weiteres Problem der Oxidation von SO₂ stellt eine Deaktivierung des NO-Oxidationskatalysators durch Sulfate und im schlimmsten Fall, durch die Physisorption von Schwefelsäure an der Katalysatoroberfläche dar.

SO₃ + H₂O -> H₂SO₄

Die Deaktivierung des Katalysators kann an den gemäß dem Stand der Technik üblicherweise Al₂O₃-basierten Katalysatoren durch eine Anhebung der Abgastemperatur auf über 500°C wieder rückgängig gemacht werden, allerdings treten diese hohen Abgastemperaturen an modernen, verbrauchsoptimierten Brennkraftmaschinen kaum mehr auf.

Gelingt keine vollständige Oxidation des im Partikelfilter eingelagerten Kohlenstoffs mit Hilfe von NO₂, so steigen der Kohlenstoffanteil und damit der Abgasgegendruck stetig an. Um dies zu vermeiden, werden aktuell die Partikelfilter vermehrt mit einer katalytischen Beschichtung zur Oxidation von NO versehen (EP 0 341 832 A2). Dabei handelt es sich um Katalysatoren mit platinhaltiger Beschichtung. Der Nachteil dieses bekannten Verfahrens besteht jedoch darin, dass das am Partikelfilter gebildete NO₂ nur zur Oxidation von Partikeln dienen kann, die stromab der katalytisch aktiven Schicht zur NO-Oxidation abgeschieden wurden, das heißt somit innerhalb des Filtermediums. Bildet sich dagegen auf der Filteroberfläche und damit auf der katalytisch aktiven Schicht eine Schicht aus abgeschiedenen Partikeln, ein sogenannter Filterkuchen, aus, so liegt der partikelfilterseitige NO-Oxidationskatalysator stromab des Filterkuchens, so dass die dort abgeschiedenen Rußpartikel nicht mit Hilfe von NO₂ aus dem, auf dem Partikelfilter aufgebrachten NO-Oxidationskatalysator oxidiert werden können. Hinzu kommt noch, dass genau genommen, nur die auf der Rohgasseite aufgebrachte Katalysator schicht zur Performance des Systems beiträgt, da das auf der Reingasseite katalytisch gebildete NO₂ nicht mehr in Kontakt mit dem auf der Rohgasseite und innerhalb des Filtermaterials abgeschiedenen Ruß kommen kann.

Ein weiteres Problem der Beschichtung des Partikelfilters besteht darin, dass die geometrischen Oberflächen des Filters deutlich geringer als die der üblicherweise eingesetzten Katalysatorsubstrate sind. Der Grund hierfür liegt darin, dass die Filter relativ große freie Querschnitte und damit freies Volumen auf der Rohgasseite benötigen, um Ruß- und Motorölasche einzulagern. Werden keramische Filtersubstrate eingesetzt, wird dies durch eine geringe Zelldichte von 50 Zellen pro Quadratinch (cpsi) bis 200 cpsi realisiert. Demgegenüber werden reine Katalysatoren üblicherweise mit Zelldichten von 400 cpsi bis 900 cpsi ausgeführt. Durch die Anhebung von 50 cpsi auf 900 cpsi ergibt sich eine Erhöhung der geometrischen Oberfläche von 1 m²/l auf 4 m²/l, wodurch erhebliche Umsatzsteigerungen an den Katalysatoren möglich werden.

Aus diesen Gründen kann, trotz der katalytischen Beschichtung des Filters, nicht auf einen NO-Oxidationskatalysator vor dem Partikelfilter verzichtet werden, so dass sich ein relativ großes Bauvolumen ergibt. Dies ist selbst dann der Fall, wenn die NO-Oxidationskatalysatoren und die Partikelfilter eine bauliche Einheit bilden, in dem der Eintrittsbereich des Partikelfilters als NO-Oxidationskatalysator ausgeführt ist, wie dies beispielsweise bei der DE 103 270 30 A1 beschrieben ist.

Bei all diesen Varianten zur passiven Regeneration mittels NO₂ ist zu beachten, dass die Rußoxidation unterhalb von 200°C bis 230°C auch durch eine Anhebung der NO₂-Mengen nicht weiter gesteigert werden kann. Bei ca. 370°C wird das Umsatzmaximum erreicht. Ab dieser Temperatur läuft die Rußoxidation nach der oben beschriebenen Reaktion (2) ab, das heißt zwei

NO₂-Moleküle reagieren mit einem Kohlenstoffmolekül. Dies bedeutet in Massangaben, dass mit einem Gramm NO₂ 0,13 g Kohlenstoff oxidiert werden können; das heißt, die Rußoxidation lässt sich durch Anheben der NO₂-Menge beliebig erhöhen.

Liegen die Temperaturen unterhalb von 200°C bis 230°C kann somit keine sichere Funktion des Partikelfilters sichergestellt werden. Dies tritt üblicherweise bei schwach belasteten und in Fahrzeugen verbauten Motoren, beispielsweise bei Personenkraftwagen, Linienbussen oder Müllfahrzeugen, die noch zusätzliche hohe Leerlaufanteile aufweisen, auf. Daher wird speziell in solchen Fällen eine zweite Möglichkeit der Partikelfilterregeneration angewendet, bei der die Abgastemperatur aktiv angehoben wird. Dies geschieht üblicherweise durch die Zugabe von Kohlenwasserstoffen (HC) stromauf von Katalysatoren, insbesondere stromauf von HC-Oxidationskatalysatoren. Aufgrund der Exothermie der Oxidation der zugegebenen Kohlenwasserstoffe mit Hilfe der Katalysatoren wird ein deutlicher Temperaturanstieg erreicht:

"HC" + O₂ -> CO + H₂O (4)

"HC" + O₂ -> CO₂ + H₂O (5)

Um diese Katalysatoren ausreichend thermisch zu stabilisieren, enthalten diese als Aktivkomponente meist Palladium. Palladium weißt zwar eine sehr gute HC-Oxidationsaktivität auf, besitzt allerdings keine NO-Oxidationsaktivität und verringert zudem die NO-Oxidationsaktivität von eventuell in den Katalysatoren enthaltenem Platin. Dies hat zur Folge, dass HC-Oxidationskatalysatoren eine deutlich geringere NO-Oxidationsaktivität aufweisen, als reine NO-Oxidationskatalysatoren.

Gelingt durch die Zudosierung von Kohlenwasserstoffen eine Temperaturanhebung auf über 600°C, kommt es zu einer Oxidation bzw. zum Abbrennen des im Partikelfilter abgeschiedenen Kohlenstoffs mit Hilfe von Sauerstoff, gemäß nachstehender Gleichungen:

C + O₂ -> CO₂ (6)

2C + O₂ -> 2CO (7)

Allerdings besteht bei dieser sogenannten aktiven Filterregeneration die Gefahr, dass es durch das exotherme Abbrennen des kohlenstoffhaltigen Rußes zu einem starken Temperaturanstieg auf bis zu 1000°C und damit zur Schädigung des Partikelfilters und/oder nachgeschalteter Katalysatoren kommen kann. Da zudem die Temperaturerhöhung für mehrere Minuten aufrecht erhalten werden muss, um eine quantitative Oxidation der Rußpartikel sicherzustellen, ist der Bedarf an Kohlenwasserstoffen nicht unerheblich und verschlechtert den Wirkungsgrad der Brennkraftmaschine, da üblicherweise als Kohlenwasserstoffquelle der Kraftstoff verwendet wird.
Ein weiteres Problem stellen, im Gegensatz zur passiven Regeneration, die hohen Kohlenmonoxidemissionen während der Regeneration dar, deren Bildung in Gleichung (7) beschrieben ist. Aus diesem Grund muss auf dem Partikelfilter und/oder stromab des Partikelfilters ein weiterer Katalysator zur Oxidation des während der Regeneration gebildeten Kohlenmonoxids angebracht werden, um dessen Austritt in die Umwelt zu vermeiden. Eine einfache Kombination der passiven und aktiven Regeneration, indem Kohlenwasserstoffe vor NO-Oxidationskatalysatoren zugegeben werden, ist nicht zielführend: Durch die Temperaturanhebung auf über 600°C wird an den NO-Oxidationskatalysatoren aufgrund der thermodynamischen Begrenzung kaum mehr NO₂ gebildet. Zudem wird die Oxidation von NO durch die hohen Mengen an Kohlenwasserstoffen behindert, wodurch es zur starken Verminderung der NO₂-Bildung kommt. Dies führt dazu, dass die Partikel allein mit Hilfe von Sauerstoff oxidiert werden müssen, da in dieser Phase kein NO₂ zur Verfügung steht, was die Regenerationszeit verlängert und zu hohen Kohlenmonoxidemissionen führt.

Gleichzeitig sind die NO-Oxidationskatalysatoren gegenüber thermischer Schädigung weit weniger stabil als Katalysatoren zur Kohlenwasserstoffoxidation, da es bei Temperaturen über 550°C zu einer irreversiblen Sinterung der Aktivkomponenten und damit einem Rückgang der NO-Oxidationsaktivität kommt.

Neben der Oxidation von kohlenstoffhaltigen Partikeln in Partikelfiltern wird NO₂ auch zur Beschleunigung der SCR-Reaktion (selektive katalytische Reduktionsreaktion) oder bei NOₓ-Speicherkatalysatoren zur Bildung von Nitraten eingesetzt.

Wie bereits oben angedeutet, besteht ein Problem der NO-Oxidationskatalysatoren darin, dass sie unter Anwesenheit von Schwefeloxid, das durch die Verbrennung von Kraftstoff- oder Schmierölschwefel gebildet wird, deaktiviert werden. Eine Möglichkeit, dieses Problem abzumildern, besteht darin, anstelle des üblicherweise als Katalysatorträgermaterial verwendeten Al₂O₃ Titandioxid einzusetzen: An diesem adsorbiert Schwefeltrioxid oder Schwefelsäure in weit geringerem Maße, gleichzeitig gelingt eine Desorption bei deutlich geringeren Temperaturen. Allerdings stellt sich bei der Verwendung von TiO₂ das Problem, dass bei höheren Temperaturen ein Übergang von der Anatasin die Rutilform stattfindet, was einen Rückgang der BET-Oberfläche (gemäß DIN ISO 9277: 2003-05) und damit einhergehend einen Rückgang der Aktivität zur Folge hat.

Ein weiterer Nachteil aktuell eingesetzter Verfahren besteht darin, dass derartige bekannte Katalysatoren nasschemisch hergestellt werden, was zur Folge hat, dass die eigentliche Aktivkomponenten Platin oft von Al₂O₃-Trägermaterial umschlossen und damit für die eigentliche Reaktion nicht zugänglich ist.

Die Patentschrift DE 697 05 901 T2 offenbart einen Katalysator zur Reinigung von Abgasen, der ein Katalysatorsubstrat, eine auf dem Substrat aufgebrachte wärmebeständige Schicht aus anorganischem Oxid als Träger für katalytische Komponenten, insbesondere auch Platin, wobei diese wärmebeständige Schicht mit Siliziumoxid dotiertes Anatas-Titanoxid enthält, umfasst.

Das Patent US 5,830,421 A offenbart ein katalytisches Material zur Umsetzung von NOx in Abgasen, bei welchem mit Platin dotiertes Titanoxid/Siliziumoxid auf einem Corderit-Monolithen aufgebracht ist.

Der Erfindung liegt die Aufgabe zugrunde unter Vermeidung obengenannter Nachteile einen Katalysator zur Oxidation von Abgasbestandteilen, insbesondere Stickstoffmonoxid, zur Verfügung zu stellen, der hinsichtlich Schwefelresistenz sowie im Hinblick auf thermische Stabilität gegenüber bislang bekannten Katalysatoren verbessert ist, sowie ein Verfahren zur Herstellung eines solchen Katalysators, eine Verwendung eines solchen Katalysators und eine mit einem solchen Katalysator hergestellte Beschichtung zur Verfügung zu stellen.

Diese Aufgabe wird durch einen Katalysator gemäß Patentanspruch 9, ein Verfahren zum Herstellen eines solchen Katalysators gemäß Patentanspruch 1, die Verwendung eines solchen Katalysators gemäß Patentanspruch 16 und durch eine mit einem solchen Katalysator hergestellte Beschichtung gemäß Patentanspruch 17 gelöst.

Insbesondere wird die Aufgabe durch einen Katalysator, insbesondere zur Oxidation von Abgasbestandteilen, wie beispielsweise Stickoxid, bevorzugt Stickstoffmonoxid, gelöst, wobei der Katalysator ein mit Platin-Nanopartikeln beschichtetes partikelförmiges Trägermaterial aus titanhaltigen Nanopartikeln, insbesondere Titandioxid-Nanopartikeln, enthält.

Ein wesentlicher Punkt der Erfindung liegt darin, dass der Katalysator aus einem partikelförmigen Trägermaterial besteht, das aus titanhaltigen Nanopartikeln zusammengesetzt ist, wobei die titanhaltigen Nanopartikel mit Platin-Nanopartikeln, beschichtet sind.

Der erfindungsgemäße Katalysator weist somit gegenüber aus dem Stand der Technik bekannten Katalysatoren zwei maßgebliche Vorteile auf, die darin bestehen, dass das Trägermaterial des Katalysators aus Nanopartikeln besteht, die eine sehr große Oberfläche zur Verfügung stellen, die mit Platin-Nanopartikeln beschichtet ist, welche die katalytisch wirksame Oxidationskomponente des erfindungsgemäßen Katalysators darstellen.

Erfindungsgemäß ist das Trägermaterial des erfindungsgemäßen Katalysators somit titanbasiert, wobei das Trägermaterial bevorzugt aus Titanoxid-Nanopartikeln und besonders bevorzugt aus Titandioxid-Nanopartikeln besteht, welche den Träger für das katalytisch wirksame platinhaltige Material darstellen. Das platinhaltige Material ist erfindungsgemäß metallisches Platin, das auf der Oberfläche der Trägermaterialpartikel angeordnet ist. Die Platinpartikel sind hierbei über einen Kontaktbereich mit den Trägerpartikeln verbunden, der punkt- bis flächenförmig ausgebildet sein kann, während die restliche Oberfläche der Platinpartikel in äußerst vorteilhafter Weise erfindungsgemäß katalytisch zur Verfügung steht und im Wesentlichen nicht von katalytisch inaktivem titanhaltigem Material überdeckt ist. Auf diese Weise stellt der erfindungsgemäße Katalysator einerseits eine maximal große katalytisch wirksame Platinoberfläche zur Verfügung, an welcher Stickstoffoxide, insbesondere Stickstoffmonoxid, oxidiert werden können, wobei darüber hinaus, zusätzlich zur maximal großen Platinoberfläche, an den einzelnen Trägermaterialpartikeln auch eine sehr große Trägermaterialoberfläche zur Verfügung gestellt wird, an welchen sich diese platinhaltigen Katalysator-Komponenten befinden, da das Trägermaterial aus sehr kleinen Nanopartikeln in der Größenordnung von einigen Nanometern mit einer entsprechend großen Oberfläche besteht. Die Herstellung der titanhaltigen Nanopartikel erfolgt hierbei gemäß dem Stand der Technik durch die Einbringung eines titanhaltigen Precursor-Materials in eine Flamme oder einen Pyrolyseofen, wie dies beispielsweise in der DE 101 09 892 B4 oder der EP 0 778 812 B1 beschrieben ist.

Somit weist der erfindungsgemäße Katalysator neben einer sehr großen katalytisch aktiven Oberfläche einen weiteren wesentlichen Vorteil auf, der darin besteht, dass der Katalysator aufgrund seines titanhaltigen Trägermaterials gegenüber einer Schwefel-Vergiftung, d.h. Deaktivierung durch schwefelhaltige Substanzen, weitgehend inert ist und seine katalytische Aktivität auch im Falle einer Verbrennung von mit schwefelhaltigen Verbindungen verunreinigten Brennstoffen behält.

Gemäß der Erfindung, sind eine Vielzahl von Trägermaterialpartikeln über zwischen diesen Partikeln angeordnete metalloxidhaltige Brücken, d. h. silizium- und/oder wolframhaltige Brücken, miteinander verbunden. Durch diese Brücken zwischen den einzelnen Trägermaterial-Partikeln, insbesondere Titandioxidkristallen, werden, wie erfindungsgemäß herausgefunden wurde, diese Titandioxidkristalle in deren Anatasform stabilisiert und es wird eine, üblicherweise oberhalb von 550°C stattfindende Umwandlung in die Rutilform des Titandioxids eingedämmt bis vollständig unterbunden, so dass die erfindungsgemäß mit silizium- und/oder wolframhaltigen Brücken miteinander verbundenen Titandioxidkristalle in der Anatasform im Wesentlichen bis ca. 800°C stabil sind. Dies bedeutet einen weiteren wesentlichen erfindungsgemäßen Vorteil, da die Anatasform des Titandioxids eine wesentlich größere Oberfläche zur Verfügung stellt als dessen Rutilform, so dass sich die Katalysatoroberfläche des erfindungsgemäßen Katalysators nicht nur aus den das Trägermaterial bildenden Nanopartikeln mit ihrer sehr großen äußeren Oberfläche, sondern auch aus der Kristallstruktur dieser Titandioxid-Nanopartikel ergibt.

Des Weiteren ist erfindungsgemäß gemäß einer bevorzugten Ausführungsform vorgesehen, dass eine Vielzahl von Platin-Nanopartikeln, mit welchen das partikelförmige Trägermaterial beschichtet ist, über zwischen diesen Platinpartikeln angeordnete silizium- und/oder wolframhaltige Brücken miteinander verbunden sind. Durch diese zwischen den Platinpartikeln ausgebildeten Brücken wird das Platin stabilisiert und dessen Sinterung, insbesondere bei hohen Temperaturen, vermindert oder optimalerweise ganz verhindert.

Es wird an dieser Stelle darauf hingewiesen, dass die zwischen den Platin- und/oder Trägermaterial-Partikeln angeordneten Brücken entweder nur zwischen den Trägermaterial-Partikeln oder aber sowohl zwischen den Trägermaterialpartikeln als auch zwischen den Platinpartikeln sowie ferner gegebenenfalls zwischen Platin- und Trägermaterialpartikeln vorliegen können.

In vorteilhafter Weise hat sich erfindungsgemäß herausgestellt, dass eine Verbrückung der Platin-Partikel zwar zu einer geringfügigen Verkleinerung der katalytisch wirksamen Oberfläche der Platin-Partikel durch die jeweiligen Anlagepunkte der jeweiligen Brücken führt, durch die Vermeidung einer Sinterung des Platins bei hohen Temperaturen ein diesbezüglicher Aktivitätsverlust des erfindungsgemäßen Katalysators jedoch nur sehr geringfügig ist. Somit ist der erfindungsgemäße Katalysator auch im zeitlichen Verlauf seines Gebrauchs stabilisiert und verfügt über eine langzeitstabile sehr große katalytisch wirksame Oberfläche zur Oxidation von Abgasbestandteilen, insbesondere Stickstoffmonoxid.

Im Übrigen hat sich erfindungsgemäß herausgestellt, dass eine weitere thermische Stabilisierung von Platin ferner durch eine Zugabe einer palladiumhaltigen Verbindung möglich ist und der erfindungsgemäße Katalysator somit optional, je nach Anwendungsgebiet, Palladium aufweisen kann.

Die Platinkonzentration des Katalysators liegt erfindungsgemäß im Bereich von 0,5 mg bis 150 mg, bevorzugt im Bereich von 1 mg bis 100 mg pro Gramm Katalysatorgewicht. Erfindungsgemäß ist es somit möglich, einen Katalysator mit einer für einen jeweiligen Anwendungsbereich optimal ausgelegten Aktivität bei einem gleichzeitigen schonenden Platinverbrauch zur Verfügung zu stellen und auf diese Weise die Kosten für die Bereitstellung des erfindungsgemäßen Katalysators äußerst ökonomisch zu gestalten. Eine erfindungsgemäß besonders bevorzugte Platinkonzentration liegt hierbei im Bereich von 1 mg bis 80 mg pro Gramm Katalysatorgewicht. Unter dem Begriff Katalysatorgewicht wird hierbei das Gesamtgewicht aus Trägermaterial,

Platin- und Brückenmaterial verstanden. Das Material der zwischen den Platin- und/oder Trägermaterial-Partikeln angeordneten Brücken ist, wie vorerwähnt, vorzugsweise siliziumhaltig, nämlich siliziumoxid- und/oder wolframhaltig, wobei auch hier Wolframoxid bevorzugt ist. Ein Vorteil von siliziumhaltigen Brücken zwischen den Platin- und/oder Trägermaterial-Partikeln besteht darin, dass sich Silizium hinsichtlich der Oxidationsaktivität von Platin und somit hinsichtlich der Oxidationsreaktion von Stickstoffmonoxid zu Stickstoffdioxid, inert verhält. Die Verwendung von wolframhaltigen Material zur Ausbildung von Brücken zwischen den Platin- und/oder Trägermaterial-Partikeln ist erfindungsgemäß dann vorgesehen, wenn neben einer Oxidationsreaktion von Stickoxid auch eine SCR-Reaktion gewünscht ist, da Wolframoxid hinsichtlich der SCR-Reaktion katalytisch aktiv ist und auf diese Weise, insbesondere in Kombination mit dem katalytisch erzeugten Stickstoffdioxid zur Entfernung von Stickstoffmonoxid beiträgt.

Des Weiteren weist der erfindungsgemäße Katalysator ein Titan:Silizium-Verhältnis von 20:1 bis 2:1 und/oder ein Titan:Wolfram-Verhältinis von 80:1 bis 8:1 auf. In vorteilhafter Weise kann der erfindungsgemäße Katalysator auch auf diese Weise an sein jeweiliges Einsatzgebiet angepasst werden, sei es in einer Feuerungsanlage, einer Müllverbrennungsanlage, einer Gasturbine, einer sonstigen Industrieanlage, in welcher eine Verbrennung durchgeführt wird, oder in einem Verbrennungsmotor. So kann der Siliziumanteil in dem erfindungsgemäßen Katalysator beispielsweise dann reduziert sein, wenn die den Katalysator durch- und/oder umströmenden Abgase relativ kalt sind, so dass eine Umwandlung von der Anatasform des Titandioxids in dessen Rutilform, die ohne eine Siliziumoxidstabilisierung des Titandioxidträgermaterials oberhalb von 550°C stattfinden würde, aufgrund einer niedrigeren Abgastemperatur im Wesentlichen nicht stattfindet. Erfindungsgemäß ist es somit möglich, durch eine Erhöhung des Siliziumanteils in dem erfindungsgemäßen Katalysator eine Anpassung des Katalysators an die jeweils auftretende Abgastemperatur vorzunehmen, respektive den Katalysator entsprechend herzustellen.

Des Weiteren wird die Aufgabe der Erfindung insbesondere auch durch ein Verfahren zum Herstellen eines Katalysators, insbesondere zur Oxidation von Abgasbestandteilen, wie beispielsweise Stickoxid, bevorzugt Stickstoffmonoxid, gelöst, wobei folgende Schritte durchgeführt werden:
- Zurverfügungstellen von titanhaltigem erstem Precursormaterial zur Erzeugung von Trägermaterial;
- Zurverfügungstellen von platinhaltigem zweitem Precursormaterial zur Erzeugung einer katalytisch aktiven, insbesondere oxidativ wirksamen, Komponente;
- Zurverfügungstellen von silizium- und/oder wolframhaltigem drittem Precursormaterial zur Erzeugung von Stabilisierungsbrücken;
- Einbringen des titanhaltigen ersten Precursormaterials in eine durchströmbare Reaktionszone einer Pyrolyseeinrichtung, wie beispielsweise eine Flamme oder einen Pyrolyseofen;
- Einbringen des platinhaltigen zweiten Precursormaterials in die Reaktionszone stromab einer Zugabe des titanhaltigen ersten Precursormaterials; und
- Einbringen des dritten Precursormaterials in die Reaktionszone
- gleichzeitig mit dem Einbringen des titanhaltigen ersten Precursormaterials und/oder
- stromab der Zugabe des titanhaltigen ersten Precursormaterials und/oder
- stromab der Zugabe des platinhaltigen zweiten Precursormaterials.

Ein wesentlicher Punkt dieses erfindungsgemäßen Verfahrens besteht darin, dass erste, zweite und dritte Precursormaterialien in einer bestimmten Reihenfolge in einer Reaktionszone einer Pyrolyseeinrichtung, wie beispielsweise einer Flamme oder einem Pyrolyseofen zu den Katalysatorbestandteilen, nämlich zu dem Trägermaterial einerseits, dem oxidativ-aktiven Katalysatormaterial andererseits und ferner zu dem Stabilisierungsmaterial, welches die Platin- und/oder Trägermaterialpartikel über Brücken miteinander verbindet, umgesetzt werden.

Zu diesem Zweck werden die jeweiligen Precursormaterialien in eine, in einer Vorzugsströmungsrichtung durchströmbare Reaktionszone der Pyrolyseeinrichtung eingebracht, wobei sich die Begriffe "stromab" und "stromauf" im Weiteren auf die vorgenannte, im Betrieb angewandte, Vorzugsströmungsrichtung beziehen.

Erfindungsgemäß ist es mittels des erfindungsgemäßen Verfahrens möglich, einen neuartigen Oxidationskatalysator zur Verfügung zu stellen, der, je nach Anwendungsgebiet, angepasste Stabilitätseigenschaften bei einer gleichzeitig optimierten Katalysatoraktivität aufweist. So ist es erfindungsgemäß möglich, das dritte Precursormaterial, das zur Erzeugung von Stabilisierungsmaterial, nämlich zur Bildung von Stabilisierungsbrücken dient, gleichzeitig mit dem titanhaltigen ersten Precursormaterial in die Reaktionszone der Pyrolyseeinrichtung einzubringen. In diesem Fall bilden sich aus dem titanhaltigen ersten Precursormaterial einerseits Titanoxidverbindungen, nämlich bevorzugt Titandioxid-Nanopartikel, welche als Trägermaterial des neuartigen Katalysators dienen, während sich aus dem dritten silizium- und/oder wolframhaltigen Precursormaterial andererseits oxidische Brücken zwischen den Titanoxidpartikeln ausbilden.

Gemäß einer zweiten erfindungsgemäßen Verfahrensvariante ist es möglich, das dritte Precursormaterial stromab der Zugabe des titanhaltigen ersten Precursormaterials in die Reaktionszone zuzugeben. Eine solche Vorgehensweise ist bevorzugt, da es auf diese Weise möglich ist, zunächst das titanhaltige erste Precursormaterial innerhalb der Reaktionszone der Pyrolyseeinrichtung zu Titanoxid, insbesondere zu Titandioxid umzusetzen, wobei in einem zweiten Schritt, d.h. stromab der Zugabe des ersten titanhaltigen Precursormaterials das dritte, brückenbildende Precursormaterial in die Reaktionszone zugegeben wird. Auf diese Weise ist es erfindungsgemäß möglich, eine Vermischung des ersten und des dritten Precursormaterials weitgehend zu vermeiden, so dass das dritte Precursormaterial lediglich zur Ausbildung von Brückenmaterial zwischen den Titanoxid-Nanopartikeln dient und eine Vermischung von Siliziumoxid und Titanoxid im Wesentlichen unterbleibt.

Sowohl bei der ersten Variante, nämlich einer gleichzeitigen Einbringung von erstem und drittem Precursormaterial in die Reaktion in der Pyrolyseeinrichtung, als auch bei der zweiten Variante, bei welcher das dritte Precursormaterial stromab einer Zugabestelle des titanhaltigen ersten Precursormaterials erfolgt, wird in einem weiteren Schritt nachgelagert das platinhaltige zweite Precursormaterial in die Reaktionszone der Pyrolyseeinrichtung eingebracht, wo die eingebrachte Platinverbindung sodann zu, bevorzugt metallischem, Platin umgesetzt wird.

Gemäß den beiden vorgenannten Verfahrensvarianten ist durch die Einbringung des platinhaltigen zweiten Precursormaterials in die Reaktionszone zu einem Zeitpunkt, zu dem sowohl das erste titanhaltige, als auch das dritte, brückenbildende Precursormaterial bereits in die Reaktionszone der Pyrolyseeinrichtung eingebracht worden sind, gewährleistet, dass die Platinpartikel an der Oberfläche der Trägermaterialpartikel angelagert werden, ohne dass eine aktive Oberfläche der Platinpartikel durch Trägermaterial- oder brückenbildendes Material überdeckt wird. Somit wird durch die Zugabe des platinhaltigen zweiten Precursormaterials nachgelagert zu einer Zugabe des ersten und dritten Precursormaterials in die Reaktionszone vermieden, dass eine Aktivitätseinschränkung des Katalysators erfolgt, da die Platinkomponente des Katalysators mit ihrer maximalen verfügbaren Oberfläche für eine Oxidationskatalyse zur Verfügung steht.

Durch die Ausbildung von metalloxidischen Brücken zwischen den einzelnen Titandioxidpartikeln bzw. -kristallen ist es möglich, die Anatasform der Titandioxidkristalle soweit zu stabilisieren, dass eine Umwandlung in die Rutilstruktur der Titandioxidkristalle nicht bereits oberhalb von 550°C, sondern erst bei einer Temperatur größer 800°C stattfindet. Somit kann durch die Ausbildung von oxidischen, nicht jedoch titanoxidischen Brücken zwischen den Titandioxidpartikeln eine maximal große Oberfläche, welche auf der Anatasstruktur der Titandioxidkristalle basiert, zur Verfügung gestellt werden.

Gemäß einer dritten Variante des erfindungsgemäßen Verfahrens ist es des Weiteren möglich, das platinhaltige zweite Precursormaterial stromab einer Zugabestelle des titanhaltigen ersten Precursormaterials in die Reaktionszone der Pyrolyseeinrichtung einzubringen, ohne dass zuvor ein brückenbildendes drittes Precursormaterial in diese Reaktionszone eingebracht wurde. In diesem Fall bildet sich zunächst aus dem titanhaltigen ersten Precursormaterial Titandioxid, welches in Form von Titanoxidkristallen anfällt, an welchen sich sodann Platinpartikel, die sich in der Reaktionszone der Pyrolyseeinrichtung aus dem zweiten Precursormaterial bilden, anlagert. Auf diese Weise ist es erfindungsgemäß möglich, einen Oxidationskatalysator für die Oxidation von Abgasbestandteilen, wie beispielsweise Stickoxid, bevorzugt Stickstoffmonoxid, zur Verfügung zu stellen, der aufgrund des als Nanopartikel vorliegenden Trägermaterials eine sehr große Trägermaterialoberfläche aufweist, an der wiederum nanopartikelförmiges metallisches Platin angeordnet ist, das seinerseits nur mit jeweiligen Kontaktstellen zwischen Platinmetall und Titandioxidkristall mit letzteren verbunden ist und auf diese Weise eine maximal große aktive Katalysatoroberfläche zur Verfügung stellt.

Des Weiteren ist es erfindungsgemäß ebenfalls vorgesehen, dass die mit Platinmetall belegten Trägermaterialpartikel in einem weiteren Schritt einem dritten Precursormaterial ausgesetzt werden, das stromab der Zugabe des platinhaltigen zweiten Precursormaterials in die Reaktionszone der Pyrolyseeinrichtung eingebracht und dort umgesetzt wird, und Brücken sowohl zwischen den Titandioxid-Nanokristallen einerseits als auch zwischen den

Platinpartikeln andererseits ausbildet, mit dem Vorteil, dass die Titandioxidkristalle einerseits in der Anatasform durch die aus dem dritten Precursormaterial gebildeten oxidischen Brücken stabilisiert werden, während andererseits und darüber hinaus auch das Platin durch die metalloxidhaltigen Brücken zwischen den Platinpartikeln an einer Sinterung gehindert wird, so dass die große Oberfläche der Platinpartikel, insbesondere Platin-Nanopartikel, erhalten bleibt. Inwieweit eine Stabilisierung der Titandioxidkristalle und/oder des an den Trägerpartikeln angeordneten Platins notwendig oder erwünscht ist, hängt hierbei, wie vorerwähnt, von dem jeweiligen Einsatzgebiet ab, wobei durch das Ausmaß der jeweiligen Brückenbildung, respektive die Menge des zugesetzten dritten Precursormaterials, eine Feinabstimmung an die jeweils gewünschten Erfordernisse des erfindungsgemäßen neuartigen Oxidationskatalysators möglich ist.

Die Precursormaterialien, die erfindungsgemäß besonders bevorzugt einzeln oder in Kombination eingesetzt werden, sind der nachfolgenden Tabelle zu entnehmen:

| | |
|---|---|
| erstes Precursormaterial | Titanverbindungen, insbesondere Titanhalogenide, wie beispielsweise TiCl₄, Ti(NO₃)₂, Ti(SO₄)₂, Titanacetate, Titantetraisopropoxid, Titanalkoholate, insbesondere Titantetraethanolat |
| zweites Precursormaterial | Platinverbindungen, insbesondere Platinchloride, Platinacetate, Platintetraminhydroxid, Platinalkoholate, Platinnitrat; Palladiumverbindungen, insbesondere Palladiumchloride |
| drittes | Siliziumverbindungen, insbesondere Siliziumhalogenide, |
| Precursormaterial | insbesondere Siliziumchloride, wie beispielsweise SiCl₄, Silane insbesondere Hexamethyldisiloxan, Siliziumalkoholate; Wolframverbindungen, insbesondere Wolframhalogenide, wie beispielsweise WCl₃, WBr₃, Wolframate, wie beispielsweise (NH₄)₁₀W₁₂O₄₁, Wolframalkoholate, Wolframacetate, Wolframnitrat |

Ist das Ziel, das Platin thermisch zu stabilisieren und einer Sinterung der Platinkristalle entgegenzuwirken, so kann Palladium und Platin gemeinsam als zweites Precursormaterial zugegeben werden, wodurch sie Platin-Palladiumverbindungen ausbilden. Allerdings geht durch dieses Verfahren die NO-Oxidationsaktivität auf Grund der durch das Palladium abgedeckten Platinoberflächen etwas zurück, was sich jedoch wiederum positiv auf die HC-Oxidationskapazität des Katalysators auswirkt.

In der Reaktionszone der Pyrolyseeinrichtung wird das erste Precursormaterial, das im Wesentlichen aus Titanverbindungen besteht, umgesetzt, so dass aus den eingesetzten Titanverbindungen Titanoxide, bevorzugt Titandioxid, gebildet wird.

Selbiges gilt für das erfindungsgemäß eingesetzte Precursormaterial im Falle von Silizium- und/oder Wolframverbindungen, die ihrerseits auch zu den jeweiligen Oxiden, insbesondere Siliziumdioxid und Wolframtrioxid umgesetzt oder oxidiert werden.

Aus diesem Grund wird das erste und/oder das dritte Precursormaterial, sofern es sich nicht um eine Palladiumverbindung handelt, in eine oder im Wesentlichen zusammen mit einer oxidierende(n) Atmosphäre in die Reaktionszone der Pyrolyseeinrichtung eingebracht. Die oxidierende Atmosphäre wird hierbei durch eine Zugabe von, insbesondere gasförmigem, Oxidationsmittel, wie beispielsweise Sauerstoff, Luft oder Kohlenmonoxid, in die Reaktionszone erzeugt. Dies bedeutet, dass unmittelbar vor, gleichzeitig oder unmittelbar nach einer Zugabe des ersten und/oder dritten Precursormaterials in die Reaktionszone, nämlich den jeweiligen Zugabeort des ersten und/oder dritten Precursormaterials, ebenfalls ein entsprechendes Oxidationsmittel, insbesondere im Überschuss, zur Reaktionszone zugesetzt wird, so dass das erste und/oder dritte Precursormaterial in der Reaktionszone von dem Oxidationsmittel quasi umschlossen wird, und in unmittelbarem Kontakt mit dem Oxidationsmittel kommt, so dass sich die entsprechenden Oxide der Precursormaterialien ausbilden können.

Des Weiteren ist es erfindungsgemäß vorgesehen, dass das zweite Precursormaterial in eine oder im Wesentlichen zusammen mit einer reduzierende(n) Atmosphäre in die Reaktionszone eingebracht wird, wobei eine solche reduzierende Atmosphäre beispielsweise durch eine Zugabe von, insbesondere gasförmigem Reduktionsmittel, wie beispielsweise Wasserstoff, in die Reaktionszone erzeugt wird. Auch hier kann das Reduktionsmittel unmittelbar vor, gleichzeitig, oder unmittelbar im Anschluss and die Zugabe des zweiten Precursormaterials an dessen Zugabeort in die Reaktionszone eingebracht werden, so dass auch hier gewährleistet ist, dass das zweite Precursormaterial in einen engen, eine Reduktionsreaktion ermöglichenden Kontakt mit dem Reduktionsmittel kommt, und von diesem beispielsweise quasi umschlossen oder eingehüllt wird.

Es sei an dieser Stelle darauf hingewiesen, dass auch die Palladiumverbindung in eine oder im Wesentlichen zusammen mit einer reduzierenden Atmosphäre in die Reaktionszone eingebracht werden kann, so dass sich auch aus der Palladiumverbindung, ebenso wie aus der als zweites Precursormaterial eingesetzten Platinverbindung in der Reaktionszone der Pyrolyseeinrichtung das jeweilige Metall ausbildet.
Des Weiteren wird die erfindungsgemäße Aufgabe durch die Verwendung eines Katalysators gemäß vorstehenden Ausführungen zur Oxidation von Abgasbestandteilen, wie beispielsweise Stickoxid, bevorzugt Stickstoffmonoxid, insbesondere nachgelagert zu einer Verbrennungsmaschine, wie beispielsweise einem Motor, insbesondere Kraftfahrzeugmotor, gelöst.

Ferner wird die erfindungsgemäße Aufgabe auch durch eine Beschichtung, insbesondere einer Abgasanlage, insbesondere aufgebracht auf keramischen oder metallischen Katalysatorsubstraten, gelöst, die unter Verwendung eines Katalysators gemäß vorstehenden Ausführungen hergestellt ist.

Zusammenfassend lassen sich die wesentlichen Aspekte der Erfindung somit wie folgt zusammenfassen:
Erfindungsgemäß werden somit wenigstens drei Metallverbindungen in Lösung gebracht und in eine Flamme oder einen Pyrolyseofen eingedüst. Dabei enthält eine Metallverbindung Titan und eine weitere Platin. Die dritte Metallverbindung dient der Stabilisierung der sich in der Pyrolyseeinrichtung, insbesondere Flamme, bildenden Nanokristalle. Dies kann beispielsweise durch die Verwendung von silizium- oder wolframhaltigen Verbindungen erfolgen.

Somit haben die drei Metallverbindungen folgende Aufgaben:

| | |
|---|---|
| 1. Titan: | stellt Oberfläche und Trägermaterial |
| 2. Platin: | stellt Oxidationskomponente |
| 3. dritte Metallverbindung: | stabilisiert Platin, Titandioxid oder beides |

Die Herstellung von Nanokristallen, insbesondere von titanhaltigen Nanopartikeln, ist Stand der Technik und gelingt, wie bereits oben beschrieben, durch die Eindüsung einer titanhaltigen Lösung in eine Flamme oder einen Pyrolyseofen, wie dies beispielsweise in der DE69509396T2 oder der DE10109892B4 beschrieben ist.

Das erfindungsgemäße Verfahren unterscheidet sich von dem genannten Stand der Technik dadurch, dass stromab der Zuführung für die titanhaltige Verbindung die Platinverbindung in die Flamme oder den Pyrolyseofen eingedüst wird.

Der Vorteil dieser Vorgehensweise liegt darin, dass das Platin sich auf der Oberfläche der Titanoxidkristalle anlagert. Dadurch wird es, im Gegensatz zu sonst üblichen nasschemischen Washcoatsynthesen, nicht von inaktivem Titandioxid abgedeckt und bleibt somit im späteren Einsatz für die NO-Moleküle frei zugänglich.

Zusätzlich wird das oben beschriebene Katalysatorgrundmaterial aus Titandioxid und Platin mit Hilfe eines weiteren Metalloxids, das ebenfalls in die Flamme oder den Pyrolyseofen zugegeben wird, stabilisiert. Vorteilhaft handelt es sich dabei um eine wolfram- und/oder siliziumhaltige Verbindung.

Dabei gibt es mehrere Möglichkeiten der Stabilisierung:
Durch die gleichzeitige Zugabe der titanhaltigen und der stabilisierenden silizium- oder wolframhaltigen Metallverbindung in die Flamme, wird das Titandioxid durch die Ausbildung von metalloxidischen jedoch nicht titanoxidhaltigen Brücken zwischen den einzelnen Titandioxidkristallen in der Anatasform stabilisiert. Dadurch ist es möglich, das Titandioxid auch oberhalb von 550°C, in der üblicherweise eine Umwandlung in Rutil stattfinden würde, thermisch bis ca. 800°C zu stabilisieren. Die Brückenbildung kann zusätzlich verbessert werden, wenn die stabilisierende Metallverbindung stromab der Zugabe der titanhaltigen Verbindung in die Flamme oder den Pyrolyseofen zugegeben wird, da sich hier die Titandioxid-Nanokristalle bereits ausgebildet haben und stabilisierende Metallverbindung ganz gezielt an diesen Oberflächen angelagert werden kann.

Erfolgt die Zugabe dieser stabilisierenden Metallverbindung zudem stromab der Zugabe der platinhaltigen Verbindung, so werden zusätzlich zwischen den platinhaltigen und den titanhaltigen Kristallen stabilisierende metalloxidhaltige Brücken ausgebildet, die zusätzlich das Platin stabilisieren und deren Sinterung verhindern. Der hypothetische Nachteil besteht allerdings darin, dass es in Teilbereichen zu einer Abdeckung der Platinkristalle durch die stabilisierende metalloxidhaltige Verbindung kommen kann, was die Aktivität des Katalysators theoretisch etwas absenkt; was jedoch durch die Vermeidung einer Sinterung des Platins zum Teil kompensiert wird. Um dies zu vermeiden, kann die stabilisierende metallhaltige Verbindung auch zwischen der Zugabe der titanhaltigen und der platinhaltigen Lösung erfolgen.

Als Precursor für die titanhaltige Verbindung können TiCl₄, Ti(NO₃)₂, Titanalkoholate, Titanacetate, Titantetraisopropoxid oder Ti(SO₄)₂ eingesetzt werden. Als Precursor für die stabilisierende Verbindung können SiCl₄ oder Silane, insbesondere Hexamethyldisiloxan, sowie WBr₃, WCl₃, Wolframacetate, Wolframalkoholate, Wolframnitrat oder Wolframate, wie (NH₄)₁₀W₁₂O₄₁, verwendet werden.

Als Precursor für die platinhaltige Verbindung können Platinchloride, Platinacetat, Platintetramminhydroxid, Platinalkoholat oder Platinnitrat dienen.

Um Platin noch weiter thermisch zu stabilisieren, ist auch eine Zugabe von palladiumhaltigen Verbindungen möglich.

Um eine Oxidation der metallhaltigen Precursor zu Metalloxiden sicherzustellen, ist es sinnvoll, zusätzlich ein Oxidationsmittel, wie Sauerstoff, Luft oder Kohlenmonoxid in die Reaktionszone einzubringen. Ebenso kann eine Reduktion der Platin- und Palladiumverbindung durch eine Zugabe von Reduktionsmittel, wie beispielsweise Wasserstoff, optimiert werden.

Weitere Ausführungsformen der Erfindung ergeben sich aus den Unteransprüchen.

Nachfolgend wird die Erfindung anhand von Ausführungsbeispielen beschrieben, die ernannte Abbildungen näher erläutern werden. Hierbei zeigen:
- Fig. 1: eine schematische Darstellung eines erfindungsgemäßen Katalysators, gemäß einer ersten Ausführungsform;
- Fig. 2: eine schematische Darstellung eines erfindungsgemäßen Katalysators, gemäß einer zweiten Ausführungsform;
- Fig. 3: eine beispielhafte schematische Darstellung der Reaktionsführung zur Herstellung des erfindungsgemäßen Katalysators gemäß der in Fig. 2 dargestellten Ausführungsform; und
- Fig. 4: eine beispielhafte schematische Darstellung eines Aufbaus zur Herstellung des erfindungsgemäßen Katalysators.

In der nachfolgenden Beschreibung werden für gleiche oder gleichwirkende Teile dieselben Bezugsziffern verwendet.

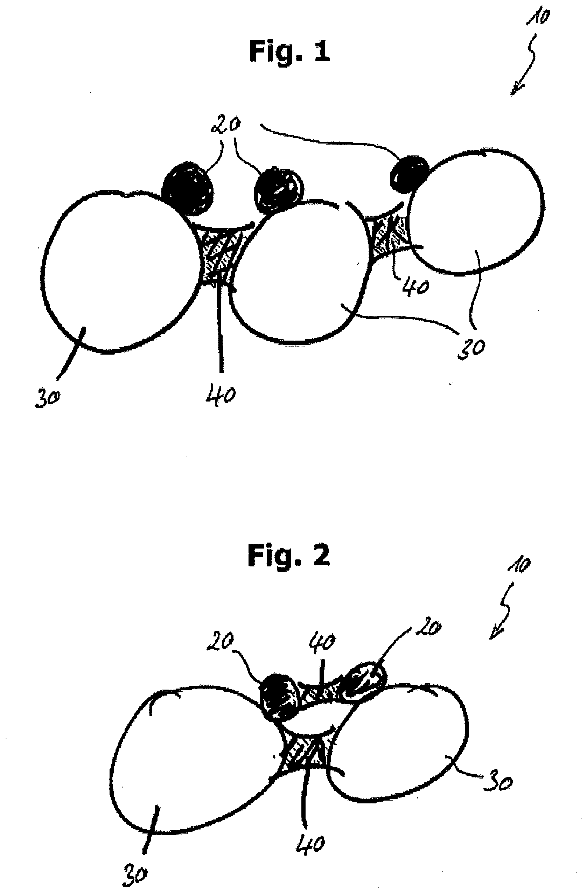

Fig. 1 zeigt eine schematische Darstellung eines erfindungsgemäßen Katalysators gemäß einer ersten Ausführungsform der Erfindung, wobei Titandioxidpartikel in der Anatasform als Trägermaterial (30) dienen. Die Trägermaterialpartikel (30) aus Titandioxid-Nanopartikeln in der Anatasform sind durch siliziumhaltige, nämlich siliziumdioxidhaltige Brücken (40) miteinander verbunden und werden auf diese Weise in der Anatasform stabilisiert. An der Oberfläche an der verbleibenden, d.h. nicht verbrückten, Oberfläche der Trägermaterialpartikel (30) sind Platinkristalle (20) in Form von Platinpartikeln angeordnet. Diese erste Ausführungsform der Erfindung wird erhalten, wenn der platinhaltige Precursor stromab der stabilisierenden (Precursor 3) und titanhaltigen Precursor (Precursor 1) in die Flamme oder den Pyrolyseofen, respektive in die jeweilige Reaktionszone, zugegeben wird.

Fig. 2 zeigt demgegenüber in schematischer Darstellung eine zweite Ausführungsform der Erfindung, bei welcher nicht nur das Trägermaterial Titandioxid (30) aus Nanokristallen in der Anatasstruktur, sondern auch die an diesen Trägermaterialpartikeln (30) angeordneten Platinpartikel (20) durch Brücken aus Siliziumoxid verbunden sind. Diese Ausführungsform des erfindungsgemäßen Katalysators wird erhalten, wenn die stabilisierende, Silizium aufweisende Verbindung stromab des titanhaltigen und des platinhaltigen Precursors in die Reaktionszone der Pyrolyseeinrichtung, d.h. in die Flamme oder den Pyrolyseofen zugegeben wird.

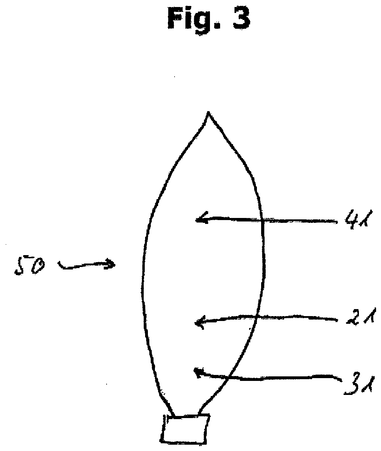

Fig. 3 zeigt eine solche Vorgehensweise in schematischer Darstellung. Dabei wird zunächst das erste Precursormaterial (31), welches titanhaltig ist, in die Flamme einer Pyrolyseeinrichtung eingedüst, im Anschluss daran wird stromab der Zugabestelle für das erste titanhaltige Precursormaterial (31) das platinhaltige zweite Precursormaterial (21) in die Flamme eingedüst. Nachdem sowohl das titanhaltige erste Precursormaterial (31) als auch das platinhaltige zweite Precursormaterial (21) in die Flamme eingedüst wurden, wird sodann wiederum stromab von den ersten beiden Zugabestellen das dritte, brückenbildende Precursormaterial (41) in die Flamme zugegeben. Gemäß diesem Ausführungsbeispiel erfolgt die Zugabe des titanhaltigen ersten Precursormaterials (31) in einer Sauerstoff-Überschuss-Zone, so dass die titanhaltige Precursorverbindung in der Pyrolyseflamme zu Titandioxid umgesetzt wird. An der Zugabestelle des titanhaltigen Precursormaterials (31) wird gleichzeitig mit dem zweiten Precursormaterial (21) Wasserstoff in die Flamme der Pyrolyseeinrichtung zudosiert (nicht dargestellt), während im Bereich der Zugabestelle für das dritte Precursormaterial (41) wiederum ein Sauerstoffüberschuss herrscht, der durch eine Zugabe von Luft (nicht dargestellt) eingestellt wird.

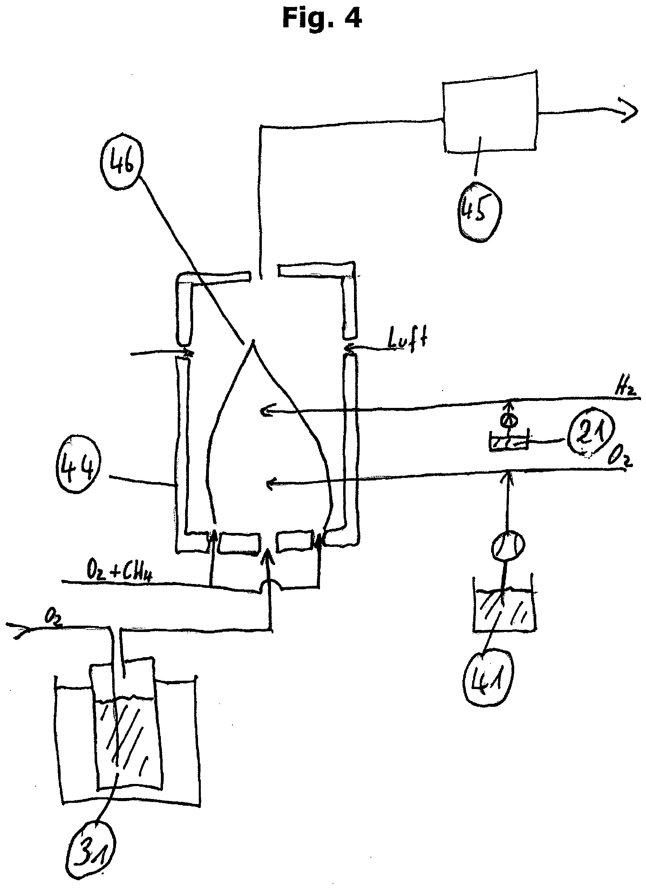

Fig. 4 stellt schematisch die Herstellung eines erfindungsgemäßen Katalysators gemäß Fig. 1 dar. Hierbei wird Sauerstoff über eine, mit Hilfe eines Ölbades auf 98°C temperierte Waschflasche geleitet, die Titantetraisopropoxid (TTIP, 98%) 31 enthält, der Durchfluss beträgt 7,5 l/min. Über eine auf 220°C beheizte Leitung wird der Titantetraisopropoxid-haltige Trägerstrom in das Zentrum des Brenners 44 zugeführt. Benachbart zu dieser Zuführung wird als Brenngas Methan sowie Sauerstoff eingeleitet. In die sich ausbildende Flamme wird in Strömungsrichtung zuerst wässrige SiCl₄-Lösung 41 über
einen O₂-Gasstrom (7,5 l/min) und anschließend eine wässrige PtCl₄-Lösung 21 über einen Wasserstoffträgerstrom zugeführt. Der Wasserstoffträgerstrom stellt in der Reaktionszone eine reduzierende Atmosphäre sicher, so dass sich Platinkristalle und nicht Platinoxidkristalle, die eine deutlich geringe NO-Oxidationsaktivität aufweisen, ausbilden. Daran schließt sich eine Quenchingzone 46 an, in der die Reaktionstemperatur mit Hilfe von zugeführter Luft abrupt abgesenkt und damit eine Partikelkoagulation vermieden wird. Das aus dem Reaktor ausströmende Gas wird schließlich über einen Filter 45 geleitet, mit dessen Hilfe der erhaltene Katalysator vom Gasstrom abgetrennt wird.

Die nachfolgende Tabelle zeigt die mit dem in Fig. 4 dargestellten und mit Hilfe einer Modellgasapparatur durchgeführten Verfahren katalytisch erhaltenen NO₂/NOₓ Verhältnisse für einen erfindungsgemäßen Katalysator im Vergleich zu einem Al₂O₃-basierten Katalysator, der dem bisherigen Stand der Technik entspricht. Für beide Katalysatoren betrug die Platinbeladung 9mg/g, die Raumgeschwindigkeit 40.000 1/h und die NO-Konzentration vor den Katalysatoren 1000 ppm. Für den erfindungsgemäßen Katalysator betrug das Titan zu Siliziumverhältnis 15:1. Die Ergebnisse zeigen einen deutlich höheren NO₂-Anteil an den Gesamtstickoxiden stromab des erfindungsgemäßen Katalysators und damit das Potential zu einer Verringerung der Platinmenge und/oder des notwendigen Katalysatorvolumens bei besser Katalysatorleistung.

| Temperatur [°C] | NO2/NOx [] | NO2/NOx [] |
|---|---|---|
| | Erfindungsgemäßer Katalysator BET: 123 m²/g Pt-Dispersion*: 0,32 | Katalysator nach dem Stand der Technik BET: 48 m²/g Pt-Dispersion*: 0,19 |
| 150 | 0,11 | 0,01 |
| 200 | 0,68 | 0,11 |
| 250 | 0,89 | 0,41 |
| 300 | 0,88 | 0,68 |
| 350 | 0,75 | 0,65 |
| 400 | 0,55 | 0,53 |

| | | |
|---|---|---|
| * Pt-Dispersion gemessen über CO-Chemiesorption (siehe J. Anderson et al., Supported metals in catalysts, Imperial College Press London 2005) | | |

### Bezugszeichenliste

- 10: Katalysator
- 20: Platinpartikel
- 21: zweites Precursormaterial
- 30: Trägermaterial
- 31: erstes Precursormaterial
- 40: Brücke
- 41: drittes Precursormaterial
- 45: Filter
- 46: Quenchingzone
- 50: Reaktionszone

## Patentansprüche

1. Verfahren zum Herstellen eines Katalysators (10), insbesondere zur Oxidation von Abgasbestandteilen, wie beispielsweise Stickoxid, bevorzugt Stickstoffmonoxid, **gekennzeichnet durch** folgende Schritte:
- Zurverfügungstellen von titanhaltigem erstem Precursormaterial (31) zur Erzeugung von Trägermaterial (30);
- Zurverfügungstellen von platin- und/oder palladiumhaltigem, insbesondere platinmetallhaltigem zweitem Precursormaterial (21) zur Erzeugung einer katalytisch aktiven, insbesondere oxidativ wirksamen, Komponente;
- Zurverfügungstellen von silizium- und/oder wolfram- haltigem, drittem Precursormaterial (41) zur Erzeugung von Stabilisierungsbrücken (40);
- Einbringen des titanhaltigen ersten Precursormaterials (31) in eine durchströmbare Reaktionszone (50) einer Pyrolyseeinrichtung, wie beispielsweise eine Flamme oder ein Pyrolyseofen;
- Einbringen des platinhaltigen zweiten Precursormaterials (21) in die Reaktionszone (50) stromab einer Zugabe des titanhaltigen ersten Precursormaterials (31); und
- Einbringen des dritten Precursormaterials (41) in die Reaktionszone (50)
- gleichzeitig mit dem Einbringen des titanhaltigen ersten Precursormaterials (31) und/oder
- stromab der Zugabe des titanhaltigen ersten Precursormaterials (31) und/oder
- stromab der Zugabe des platinhaltigen zweiten Precursormaterials (21).

2. Verfahren nach Anspruch 1, **dadurch gekennzeichnet, dass** als Precursor-materialien folgende Substanzen einzeln oder in Kombination, insbesondere in Form von Lösungen, verwendet werden:
| | |
|---|---|
| erstes Precursormaterial | Titanverbindungen, insbesondere Titanhalogenide, wie beispielsweise TiCl₄, Ti(NO₃)₂, Ti(SO₄)₂, Titanacetate, Titantetraisopropoxid, Titanalkoholate, insbesondere Titantetraethanolat |
| zweites Precursormaterial | Platinverbindungen, insbesondere Platinchloride, Platinacetate, Platintetraminhydroxid, Platinalkoholate, Platinnitrat, Palladiumverbindungen, insbesondere Palladiumchloride |
| drittes Precursormaterial | Siliziumverbindungen, insbesondere Siliziumhalogenide, insbesondere Siliziumchloride, wie beispielsweise SiCl₄, Silane, insbesondere Hexamethyldisiloxan, Siliziumalkoholate, Wolframverbindungen, insbesondere Wolframhalogenide, wie beispielsweise WCl₃, WBr₃, Wolframate, wie beispielsweise (NH₄)₁₀W₁₂O₄₁, Wolframalkoholate, Wolframacetate, Wolframnitrat |

3. Verfahren nach einem der vorhergehenden Ansprüche 1 oder 2, **dadurch gekennzeichnet, dass** das erste und/oder dritte Precursormaterial, sofern es sich nicht um eine Palladiumverbindung handelt, in eine oder im Wesentlichen zusammen mit einer oxidierende(n) Atmosphäre in die Reaktionszone (50) eingebracht wird.

4. Verfahren nach Anspruch 3, **dadurch gekennzeichnet, dass** die oxidierende Atmosphäre durch eine Zugabe von, insbesondere gasförmigem, Oxidationsmittel, wie beispielsweise Sauerstoff und/oder Luft, in der Reaktionszone (50) erzeugt wird.

5. Verfahren nach einem der vorhergehenden Ansprüche 1 bis 4, **dadurch gekennzeichnet, dass** das zweite Precursormaterial in eine oder im Wesentlichen zusammen mit einer reduzierende(n) Atmosphäre in die Reaktionszone (50) eingebracht wird.

6. Verfahren nach Anspruch 5, **dadurch gekennzeichnet, dass** die reduzierende Atmosphäre durch eine Zugabe von, insbesondere gasförmigem, Reduktionsmittel, wie beispielsweise Wasserstoff und/oder Methan, in der Reaktionszone (50) erzeugt wird.

7. Verfahren nach einem der vorhergehenden Ansprüche 1 bis 6, **dadurch gekennzeichnet, dass** das dritte Precursormaterial stromab der Zugabe des ersten Precursormaterials in die Reaktionszone (50) eingebracht wird, wodurch eine Vermischung des ersten Precursormaterials und des dritten Precursormaterials weitgehend vermieden wird.

8. Verfahren nach einem der vorhergehenden Ansprüche 1 bis 7, **dadurch gekennzeichnet, dass** das zweite Precursormaterial stromab der Zugabe des ersten Precursormaterials in die Reaktionszone (50) eingebracht wird und das dritte Precursormaterial stromab der Zugabe des ersten Precursormaterials und stromab der Zugabe des zweiten Precursormaterials in die Reaktionszone (50) eingebracht wird.

9. Katalysator (10) zur Oxidation von Abgasbestandteilen, insbesondere mit einem Gehalt an Stickoxid, bevorzugt Stickstoffmonoxid, erhältlich mit dem Verfahren nach einem der Ansprüche 1-8, **dadurch gekennzeichnet, dass** der Katalysator (10) ein mit Platinnanopartikeln (20) beschichtetes partikelförmiges Trägermaterial (30) aus titanhaltigen Nanopartikeln enthält, wobei die Platinpartikel über einen Kontaktbereich mit den Trägerpartikeln verbunden sind, der punkt- bis flächenförmig ausgebildet sein kann, und die restliche Oberfläche der Platinpartikel im Wesentlichen nicht von katalytisch inaktivem titanhaltigem Material überdeckt ist, und wobei eine Vielzahl von Platinnanopartikeln (20) und/oder titanhaltigen Nanopartikeln (30) über zwischen diesen Partikeln angeordnete, metalloxidhaltige Brücken (40) miteinander verbunden ist, wobei die metalloxidhaltigen Brücken (40) silizium- und/oder wolframhaltige Brücken darstellen.

10. Katalysator (10) nach Anspruch 9, **dadurch gekennzeichnet, dass** die titanhaltigen Nanopartikel (30) Titanoxid-Nanopartikel, insbesondere Titandioxid-Nanopartikel, sind.

11. Katalysator (10) nach Anspruch 10, erhältlich mit dem Verfahren nach Anspruch 7, **dadurch gekennzeichnet, dass** nur die Titanoxid-Nanopartikel über metalloxidhaltige Brücken (40), bei denen es sich um siliziumhaltige Brücken handelt, miteinander verbunden sind, aber im Wesentlichen keine Vermischung von Siliziumoxid und Titanoxid vorliegt.

12. Katalysator (10) nach Anspruch 9 oder 10, erhältlich mit dem Verfahren nach Anspruch 8, **dadurch gekennzeichnet, dass** sowohl die Platinnanopartikel (20) als auch die titanhaltigen Nanopartikeln (30) über zwischen diesen Partikeln angeordnete, metalloxidhaltige Brücken (40) miteinander verbunden sind.

13. Katalysator nach einem der Ansprüche 9 bis 12, **dadurch gekennzeichnet, dass** der Katalysator (10) Palladium aufweist.

14. Katalysator nach einem der Ansprüche 9 bis 13, **dadurch gekennzeichnet, dass** der Katalysator eine Platinkonzentration im Bereich von 0,5 mg bis 150 mg, bevorzugt im Bereich von 1 mg bis 100 mg, pro 1 Gramm Katalysatorgewicht, aufweist.

15. Katalysator nach einem der Ansprüche 9 bis 14, **dadurch gekennzeichnet, dass** der Katalysator ein Titan : Silizium-Verhältnis von 20 : 1 bis 2 : 1 und/oder ein Titan : Wolfram-Verhältnis von 80 : 1 bis 8 : 1 aufweist.

16. Verwendung eines Katalysators (10) gemäß einem der Ansprüche 9 bis 15 zur Oxidation von Abgasbestandteilen, wie beispielsweise Stickoxid, bevorzugt Stickstoffmonoxid, insbesondere nachgelagert zu einer Verbrennungsmaschine, wie beispielsweise einem Motor, insbesondere Kraftfahrzeugmotor.

17. Beschichtung, hergestellt unter Verwendung eines Katalysators (10) gemäß einem der Ansprüche 9 bis 15, insbesondere zur Aufbringung auf keramische oder metallische Katalysatorsubstrate.

## Claims

1. A process for producing a catalyst (10), especially for oxidation of exhaust gas constituents, for example nitrogen oxide, preferably nitrogen monoxide, **characterized by** the following steps:
- providing titanium-containing first precursor material (31) for production of support material (30);
- providing platinum- and/or palladium-containing, especially platinum metal-containing, second precursor material (21) for production of a catalytically active, especially oxidatively active, component;
- providing silicon- and/or tungsten-containing third precursor material (41) for production of stabilization bridges (40);
- introducing the titanium-containing first precursor material (31) into a through-flow reaction zone (50) of a pyrolysis device, for example a flame or a pyrolysis furnace;
- introducing the platinum-containing second precursor material (21) into the reaction zone (50) downstream of an addition of the titanium-containing first precursor material (31); and
- introducing the third precursor material (41) into the reaction zone (50)
- simultaneously with the introducing of the titanium-containing first precursor material (31) and/or
- downstream of the addition of the titanium-containing first precursor material (31) and/or
- downstream of the addition of the platinum-containing second precursor material (21).

2. The process according to Claim 1, **characterized in that** the precursor materials used are the following substances, individually or in combination, especially in the form of solutions:
| | |
|---|---|
| First precursor material | Titanium compounds, especially titanium halides, for example TiCl₄, Ti (NO₃)₂, Ti(SO₄)₂, titanium acetates, titanium tetraisopropoxide, titanium alkoxides, especially titanium tetraethoxide |
| Second precursor material | platinum compounds, especially platinum chlorides, platinum acetates, tetra-ammineplatinum hydroxide, platinum alkoxides, platinum nitrate, palladium compounds, especially palladium chlorides |
| Third precursor material | Silicon compounds, especially silicon halides, especially silicon chlorides, for example SiCl₄, silanes, especially hexamethyldisiloxane, silicon alkoxides, tungsten compounds, especially tungsten halides, for example WCl₃, WBr₃, tungstates, for example (NH₄) ₁₀W₁₂O₄₁, tungsten alkoxides, tungsten acetates, tungsten nitrate |

3. The process according to either of the preceding Claims 1 and 2, **characterized in that** the first and/or third precursor material, if it is not a palladium compound, is introduced into the reaction zone (50) in a or essentially together with an oxidizing atmosphere.

4. The process according to Claim 3, **characterized in that** the oxidizing atmosphere is generated in the reaction zone (50) by addition of oxidizing agents, especially gaseous oxidizing agents, for example oxygen and/or air.

5. The process according to any of the preceding Claims 1 to 4, **characterized in that** the second precursor material is introduced into the reaction zone (50) in a or essentially together with a reducing atmosphere.

6. The process according to Claim 5, **characterized in that** the reducing atmosphere is generated in the reaction zone (50) by addition of reducing agents, especially gaseous reducing agents, for example hydrogen and/or methane.

7. The process according to any of the preceding Claims 1 to 6, **characterized in that** the third precursor material is introduced into the reaction zone (50) downstream of the addition of the first precursor material, which largely avoids mixing of the first precursor material and the third precursor material.

8. The process according to any of the preceding Claims 1 to 7, **characterized in that** the second precursor material is introduced into the reaction zone (50) downstream of the addition of the first precursor material, and the third precursor material is introduced into the reaction zone (50) downstream of the addition of the first precursor material and downstream of the addition of the second precursor material.

9. A catalyst (10) for oxidation of exhaust gas constituents, especially having a content of nitrogen oxide, preferably nitrogen monoxide, obtainable by the process according to any of Claims 1-8, **characterized in that** the catalyst (10) comprises a particulate support material (30) composed of titanium-containing nanoparticles that has been coated with platinum nanoparticles (20), wherein the platinum particles have been bonded to the carrier particles over a contact region that may be in the form of dots or of an area, and the remaining surface area of the platinum particles is essentially not covered by catalytically inactive titanium-containing material, and wherein a multitude of platinum nanoparticles (20) and/or titanium-containing nanoparticles (30) are bonded to one another via metal oxide-containing bridges (40) disposed between these particles, wherein the metal oxide-containing bridges (40) are silicon- and/or tungsten-containing bridges.

10. The catalyst (10) according to Claim 9, **characterized in that** the titanium-containing nanoparticles (30) are titanium oxide nanoparticles, especially titanium dioxide nanoparticles.

11. The catalyst (10) according to Claim 10, obtainable by the process according to Claim 7, **characterized in that** only the titanium oxide nanoparticles are bonded to one another via metal oxide-containing bridges (40) that are silicon-containing bridges, but there is essentially no mixing of silicon oxide and titanium oxide.

12. The catalyst (10) according to Claim 9 or 10, obtainable by the process according to Claim 8, **characterized in that** both the platinum nanoparticles (20) and the titanium-containing nanoparticles (30) are bonded to one another via metal oxide-containing bridges (40) disposed between them.

13. The catalyst according to any of Claims 9 to 12, **characterized in that** the catalyst (10) includes palladium.

14. The catalyst according to any of Claims 9 to 13, **characterized in that** the catalyst has a platinum concentration in the range from 0.5 mg to 150 mg, preferably in the range from 1 mg to 100 mg, per 1 gram of catalyst weight.

15. The catalyst according to any of Claims 9 to 14, **characterized in that** the catalyst has a titanium:silicon ratio of 20:1 to 2:1 and/or a titanium:tungsten ratio of 80:1 to 8:1.

16. The use of a catalyst (10) according to any of Claims 9 to 15 for oxidation of exhaust gas constituents, for example nitrogen oxide, preferably nitrogen monoxide, especially downstream of a combustion machine, for example an engine, especially a motor vehicle engine.

17. A coating produced using a catalyst (10) according to any of Claims 9 to 15, especially for application to ceramic or metallic catalyst substrates.

## Revendications

1. Procédé pour la préparation d'un catalyseur (10), en particulier pour l'oxydation de composants de gaz échappement, comme par exemple d'oxyde d'azote, préférablement de monoxyde d'azote, **caractérisé par** les étapes suivantes :
- mise à disposition de premier matériau (31) précurseur contenant du titane pour la génération de matériau de support (30) ;
- mise à disposition de deuxième matériau précurseur (21) contenant du platine et/ou du palladium, en particulier contenant un métal de type platine, pour la génération d'un composant catalytiquement actif, en particulier efficace de manière oxydante ;
- mise à disposition de troisième matériau précurseur (41) contenant du silicium et/ou du tungstène, pour la génération de ponts de stabilisation (40) ;
- introduction du premier matériau précurseur (31) contenant du titane dans une zone de réaction (50), qu'il peut traverser, d'un dispositif de pyrolyse, comme par exemple une flamme ou un four de pyrolyse ;
- introduction du deuxième matériau précurseur (21) contenant du platine dans la zone de réaction (50) en aval d'un ajout du premier matériau précurseur (31) contenant du titane ; et
- introduction du troisième matériau précurseur (41) dans la zone de réaction (50)
o en même temps que l'introduction du premier matériau précurseur (31) contenant du titane et/ou
o en aval de l'ajout du premier matériau précurseur (31) contenant du titane et/ou
o en aval de l'ajout du deuxième matériau précurseur (21) contenant du platine.

2. Procédé selon la revendication 1, **caractérisé en ce qu'**en tant que matériaux précurseurs, des substances suivantes, individuellement ou en combinaison, en particulier sous forme de solutions, sont utilisées :
| | |
|---|---|
| premier matériau précurseur | composés du titane, en particulier halogénures de titane, comme par exemple TiCl₄, Ti (NO₃) ₂, Ti (SO₄)₂, des acétates de titane, le tétraisopropoxyde de titane, des alcoolates de titane, en particulier le tétraéthanolate de titane |
| deuxième matériau précurseur | composés du platine, en particulier des chlorures de platine, des acétates de platine, l'hydroxyde de tétramine de platine, les alcoolates de platine, le nitrate de platine, des composés du palladium, en particulier des chlorures de palladium |
| troisième matériau précurseur | composés du silicium, en particulier des halogénures de silicium, en particulier des chlorures de silicium, comme par exemple SiCl₄, des silanes, en particulier l'hexaméthyldisiloxane, des alcoolates de silicium, des composés du tungstène, en particulier des halogénures de tungstène, comme par exemple WCl₃, WBr₃, des tungstates, comme par exemple (NH₄) ₁₀W₁₂O₄₁, des alcoolates de tungstène, des acétates de tungstène, le nitrate de tungstène |

3. Procédé selon l'une quelconque des revendications précédentes 1 et 2, **caractérisé en ce que** le premier et/ou le troisième matériau précurseur, pour autant qu'il ne s'agit pas d'un composé du palladium, est introduit dans ou essentiellement ensemble avec une atmosphère oxydante dans la zone de réaction (50).

4. Procédé selon la revendication 3, **caractérisé en ce que** l'atmosphère oxydante est générée par un ajout d'agent d'oxydation, en particulier gazeux, comme par exemple de l'oxygène et/ou de l'air, dans la zone de réaction (50).

5. Procédé selon l'une quelconque des revendications précédentes 1 à 4, **caractérisé en ce que** le deuxième matériau précurseur est introduit dans ou essentiellement ensemble avec une atmosphère réductrice dans la zone de réaction (50).

6. Procédé selon la revendication 5, **caractérisé en ce que** l'atmosphère réductrice est générée par un ajout d'agent de réduction, en particulier gazeux, comme par exemple de l'hydrogène et/ou du méthane, dans la zone de réaction (50).

7. Procédé selon l'une quelconque des revendications précédentes 1 à 6, **caractérisé en ce que** le troisième matériau précurseur est introduit en aval de l'ajout du premier matériau précurseur dans la zone de réaction (50), un mélange du premier matériau précurseur et du troisième matériau précurseur étant ainsi largement évité.

8. Procédé selon l'une quelconque des revendications précédentes 1 à 7, **caractérisé en ce que** le deuxième matériau précurseur est introduit en aval de l'ajout du premier matériau précurseur dans la zone de réaction (50) et le troisième matériau précurseur est introduit en aval de l'ajout du premier matériau précurseur et en aval de l'ajout du deuxième matériau précurseur dans la zone de réaction (50).

9. Catalyseur (10) pour l'oxydation de composants de gaz échappement, en particulier comportant une teneur en oxyde d'azote, préférablement en monoxyde d'azote, pouvant être obtenu avec le procédé selon l'une quelconque des revendications 1 à 8, **caractérisé en ce que** le catalyseur (10) contient un matériau de support particulaire (30), composé de nanoparticules contenant du titane, revêtu par des nanoparticules de platine (20), les particules de platine étant reliées aux particules de support par l'intermédiaire d'une région de contact, qui peut être formée de manière ponctuelle à plate, et la surface restante des particules de platine n'étant pas essentiellement recouverte de matériau catalytiquement inactif contenant du titane, et une pluralité de nanoparticules de platine (20) et/ou de nanoparticules contenant du titane (30) étant reliées entre elles par l'intermédiaire de ponts (40) contenant un oxyde métallique, disposés entre ces particules, les ponts (40) contenant un oxyde métallique représentant des ponts contenant du silicium et/ou du tungstène.

10. Catalyseur (10) selon la revendication 9, **caractérisé en ce que** les nanoparticules contenant du titane (30) sont des nanoparticules d'oxyde de titane, en particulier des nanoparticules de dioxyde de titane.

11. Catalyseur (10) selon la revendication 10, pouvant être obtenu par le procédé selon la revendication 7, **caractérisé en ce que** seulement les nanoparticules d'oxyde de titane sont reliées entre elles par l'intermédiaire de ponts (40) contenant un oxyde métallique, lesquels sont des ponts contenant du silicium, mais essentiellement aucun mélange d'oxyde de silicium et d'oxyde de titane n'est présent.

12. Catalyseur (10) selon la revendication 9 ou 10, pouvant être obtenu par un procédé selon la revendication 8, **caractérisé en ce qu'**aussi bien les nanoparticules de platine (20) que les nanoparticules contenant du titane (30) sont reliées entre elles par l'intermédiaire de ponts (40) contenant un oxyde métallique disposés entre ces particules.

13. Catalyseur selon l'une quelconque des revendications 9 à 12, **caractérisé en ce que** le catalyseur (10) présente du palladium.

14. Catalyseur selon l'une quelconque des revendications 9 à 13, **caractérisé en ce que** le catalyseur présente une concentration en platine dans la plage de 0,5 mg à 150 mg, préférablement dans la plage de 1 mg à 100 mg, par 1 gramme de poids de catalyseur.

15. Catalyseur selon l'une quelconque des revendications 9 à 14, **caractérisé en ce que** le catalyseur présente un rapport titane:silicium de 20:1 à 2:1 et/ou un rapport titane:tungstène de 80:1 à 8:1.

16. Utilisation d'un catalyseur (10) selon l'une quelconque des revendications 9 à 15 pour l'oxydation de composants de gaz d'échappement, comme par exemple d'oxyde d'azote, préférablement de monoxyde d'azote, en particulier en aval d'une machine à combustion, comme par exemple un moteur, en particulier un moteur de véhicule automobile.

17. Revêtement, préparé avec l'utilisation d'un catalyseur (10) selon l'une quelconque des revendications 9 à 15, en particulier pour l'application sur des substrats de catalyseur céramiques ou métalliques.
